# FASCICULE DE BREVET EUROPEEN

(11) **EP 3 110 643 B1**
(45) Date de publication et mention de la délivrance du brevet: **04.10.2017**
(21) Numéro de dépôt: 15709261.0
(22) Date de dépôt: 17.02.2015
(51) Int. Cl.: B60J 5/06, E05B 83/40, B60K 15/05, E05B 79/20, E05C 7/06, E05B 81/64, E05B 83/34

(54) **MECANISME DE BLOCAGE DE PORTE COULISSANTE**
SPERRMECHANISMUS FÜR EINE SCHIEBETÜR
SLIDING DOOR BLOCKING MECHANISM

(30) Priorité: 24.02.2014 FR 1451472
(43) Date de publication de la demande: 04.01.2017
(73) Titulaire: PSA Automobiles SA, 78300 Poissy (FR)
(72) Inventeur: GUERTEAU, Frederic, F-78500 Sartrouville (FR); TURBIEZ, Bertille, F-78470 St Remy Les Chevreuse (FR)
(74) Mandataire: Jeannin, Laurent Jean-Pierre
(86) Numéro de dépôt international: PCT/FR2015/050376
(87) Numéro de publication internationale: WO 2015/124858

(56) Documents cités:
- DE-A1-102006 028 119
- JP-A- H11 115 496
- JP-A- 2008 062 896
- US-A1- 2006 220 412

## Description

La présente invention concerne de manière générale un mécanisme de blocage d'une porte coulissante montée sur un véhicule automobile. Un tel mécanisme de blocage est utile pour garantir que la porte coulissante ne pourra pas être ouverte si la trappe à carburant est elle même ouverte. La présente invention concerne concrètement un mécanisme selon le préambule de la revendication 1. Le document JP2008062896 décrit un mécanisme de blocage du mouvement d'ouverture, mais en cas de porte coulissante mécanique ou électrique, le mécanisme doit être modifié pour répondre aux spécificités de commande.

Un but de la présente invention est de répondre aux inconvénients des documents de l'art antérieur mentionnés ci-dessus et en particulier, tout d'abord, de proposer un mécanisme de blocage qui ne nécessite pas de modifications lorsqu'il est monté sur un véhicule avec une porte coulissante mécanique ou bien électrique.

Pour cela un premier aspect de l'invention concerne un mécanisme de blocage de porte coulissante de véhicule comprenant :
- un bloqueur mécanique agencé pour bloquer ou libérer mécaniquement un mouvement d'ouverture d'une porte coulissante du véhicule,
- un palpeur mécanique agencé pour détecter une ouverture d'une trappe à carburant du véhicule et commander mécaniquement le bloqueur en fonction de l'ouverture de la trappe à carburant de sorte à bloquer le mouvement d'ouverture de la porte coulissante lorsque la trappe à carburant est ouverte, caractérisé en ce que le palpeur comprend une piste de détection agencée pour permettre une détection électrique du mouvement mécanique du palpeur. Le mécanisme de blocage selon la présente invention comprend une piste directement agencée sur le palpeur, ce qui permet d'intégrer la détection électrique sans aucune modification.

Avantageusement, le véhicule comprend un moteur électrique de déplacement de la porte coulissante, et le mécanisme de blocage de porte coulissante de véhicule comprend un capteur électrique agencé pour coopérer avec la piste de came du palpeur, et pour couper un circuit d'alimentation du moteur électrique de déplacement de la porte coulissante.

Avantageusement, le capteur électrique est étanche. La trappe à carburant étant située en extérieur, il est important de prévoir une étanchéité au ruissellement ou aux projections d'eau.

Avantageusement, le mécanisme de blocage de porte coulissante de véhicule comprend un corps agencé pour recevoir le palpeur, et le corps comprend une empreinte agencée pour recevoir le capteur électrique. Le mécanisme propose une empreinte de fixation prête à recevoir le capteur électrique, en cas de montage sur un véhicule avec option d'ouverture électrique de la porte coulissante. On peut envisager de clipser le capteur électrique sur le corps de palpeur.

Un deuxième aspect de l'invention concerne un véhicule automobile comprenant un mécanisme de blocage de porte coulissante de véhicule selon le premier aspect de l'invention.

Avantageusement, la porte coulissante est agencée du même côté du véhicule que la trappe à carburant.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :

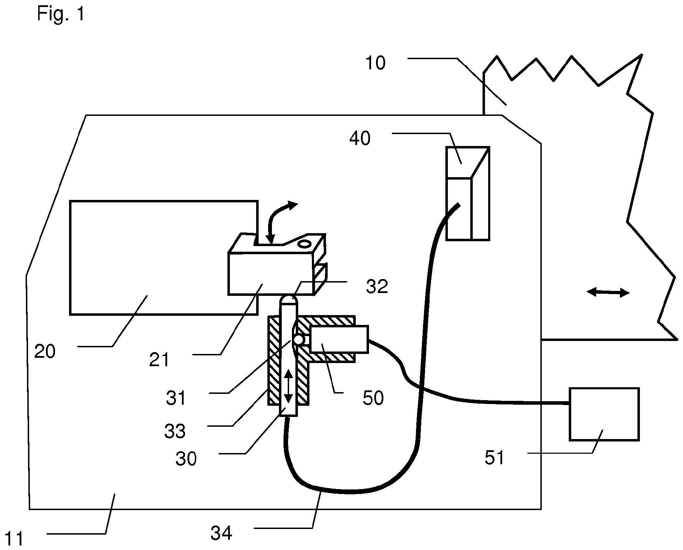

- la figure 1 représente une vue de la face interne d'une trappe à carburant, avec un palpeur d'un mécanisme de blocage selon la présente invention.

La figure 1 représente une vue interne d'une trappe à carburant 20, montée sur une aile 11 de véhicule. Le véhicule comprend également une porte latérale 10 qui est coulissante.

Une charnière 21 permet à la trappe à carburant 20 de s'ouvrir pour accéder à un orifice de réservoir (non représenté sur la figure). Lorsque la trappe à carburant 20 est ouverte, il convient de bloquer le mouvement de la porte coulissante 10, pour éviter d'endommager la structure du véhicule, et/ou de pincer l'utilisateur ou le pistolet de remplissage en carburant.

A cet effet, le véhicule est équipé d'un mécanisme de blocage de porte coulissante qui comprend un bloqueur 40, commandé mécaniquement par un palpeur 30. Le palpeur 30 et le bloqueur 40 sont reliés entre eux par un câble 34 coulissant dans une gaine par exemple.

Le palpeur 30 comprend une tête de palpeur 32 hémisphérique agencée en regard de la charnière 21, pour détecter un mouvement de cette dernière lors de l'ouverture de la trappe à carburant 20 et transformer ce mouvement en mouvement longitudinal du palpeur 30, comme le montre la double flèche sur ce dernier.

Le palpeur 30 est monté coulissant dans un corps 33, et ce corps 33 est agencé pour recevoir un contacteur électrique 50. En effet, si la porte coulissante 10 est à ouverture - fermeture électrique, alors il convient également d'inhiber le fonctionnement électrique lorsque la trappe à carburant 20 est ouverte.

A cet effet, il est prévu une piste de came 31 sur le palpeur 30, et le contacteur 50 est agencé en regard de cette piste de came 31, pour détecter électriquement le déplacement du palpeur 30. Le contacteur 50 est donc un capteur électrique qui est relié à une unité centrale de commande 51, cette dernière pourra donc inhiber le fonctionnement de la porte coulissante 10 tant que la trappe à carburant 20 sera ouverte.

Le contacteur 50 est donc monté sur le corps 33 lorsque le véhicule en question bénéficie d'une assistance électrique de coulissement de la porte coulissante 10, mais le mécanisme de blocage est le même, que la porte coulissante 10 soit manuelle ou électrique.

On peut envisager de clipser le contacteur 50 dans le corps 33 pour une mise en place aisée.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Mécanisme de blocage de porte coulissante (10) de véhicule comprenant :
- un bloqueur (40) mécanique agencé pour bloquer ou libérer mécaniquement un mouvement d'ouverture d'une porte coulissante (10) de véhicule,
- un palpeur (30) mécanique agencé pour détecter une ouverture d'une trappe à carburant (20) du véhicule et commander mécaniquement le bloqueur (40) en fonction de l'ouverture de la trappe à carburant (20) de sorte à bloquer le mouvement d'ouverture de la porte coulissante (10) lorsque la trappe à carburant (20) est ouverte, **caractérisé en ce que** le palpeur (30) comprend une piste de came (31) agencée pour permettre une détection électrique du mouvement mécanique du palpeur (30).

2. Mécanisme de blocage de porte coulissante (10) de véhicule selon la revendication précédente, le véhicule comprenant un moteur électrique de déplacement de la porte coulissante (10), **caractérisé en ce que** le mécanisme de blocage de porte coulissante (10) de véhicule comprend un capteur électrique agencé pour coopérer avec la piste de came (31) du palpeur (30), et pour couper un circuit d'alimentation du moteur électrique de déplacement de la porte coulissante (10).

3. Mécanisme de blocage de porte coulissante (10) de véhicule selon la revendication précédente, **caractérisé en ce que** le capteur électrique est étanche.

4. Mécanisme de blocage de porte coulissante (10) de véhicule selon l'une des revendications précédentes, **caractérisé en ce qu'**il comprend un corps (33) agencé pour recevoir le palpeur (30), et **en ce que** le corps (33) comprend une empreinte agencée pour recevoir le capteur électrique.

5. Véhicule automobile comprenant un mécanisme de blocage de porte coulissante (10) de véhicule selon l'une des revendications précédentes.

6. Véhicule automobile selon la revendication précédente, **caractérisé en ce que** la porte coulissante (10) est agencée du même côté du véhicule que la trappe à carburant (20).

## Patentansprüche

1. Sperrmechanismus für Fahrzeugschiebetür (10), umfassend:
- einen mechanischen Blockierer (40), der eingerichtet ist, um eine Öffnungsbewegung einer Fahrzeugschiebetür (10) zu blockieren oder freizugeben,
- einen mechanischen Fühler (30), der eingerichtet ist, um ein Öffnen eines Tankdeckels (20) des Fahrzeugs zu erfassen und mechanisch den Blockierer (40) in Abhängigkeit von dem Öffnen des Tankdeckels (20) derart zu steuern, dass die Öffnungsbewegung der Schiebetür (10) blockiert wird, wenn der Tankdeckel (20) offen ist, **dadurch gekennzeichnet, dass** der Fühler (30) eine Kurvenbahn (31) umfasst, die eingerichtet ist, um ein elektrisches Erfassen der mechanischen Bewegung des Fühlers (30) zu erlauben.

2. Sperrmechanismus für Fahrzeugschiebetür (10) nach dem vorhergehenden Anspruch, wobei das Fahrzeug einen Elektromotor zum Verlagern der Schiebetür (10) umfasst, **dadurch gekennzeichnet, dass** der Blockierungsmechanismus der Fahrzeugschiebetür (10) einen elektrischen Sensor umfasst, der eingerichtet ist, um mit der Kurvenbahn (31) des Fühlers (30) zusammenzuwirken, und um eine Versorgungsschaltung des Elektromotors zum Verlagern der Schiebetür (10) zu unterbrechen.

3. Sperrmechanismus für Fahrzeugschiebetür (10) nach dem vorhergehenden Anspruch, **dadurch gekennzeichnet, dass** der elektrische Sensor dicht ist.

4. Sperrmechanismus für Fahrzeugschiebetür (10) nach einem der vorhergehenden Ansprüche, **dadurch gekennzeichnet, dass** er einen Körper (33) umfasst, der eingerichtet ist, um den Fühler (30) aufzunehmen, und dass der Körper (33) einen Abdruck umfasst, der eingerichtet ist, um den elektrischen Fühler aufzunehmen.

5. Kraftfahrzeug, das einen Sperrmechanismus für Fahrzeugschiebetür (10) nach einem der vorhergehenden Ansprüche umfasst.

6. Kraftfahrzeug nach dem vorhergehenden Anspruch, **dadurch gekennzeichnet, dass** die Schiebetür (10) auf derselben Seite des Fahrzeugs wie der Tankdeckel (20) eingerichtet ist.

## Claims

1. A blocking mechanism for a sliding door (10) of a vehicle, including:
- a mechanical blocking device (40) arranged so as to mechanically block or release a movement for opening a sliding door (10) of a vehicle,
- a mechanical sensor (30) arranged so as to detect opening of a fuel tank flap (20) of the vehicle and to mechanically control the blocking device (40) as a function of opening of the fuel filler flap (20) so as to block the movement for opening the sliding door (10) when the fuel filler flap (20) is open, **characterized in that** the sensor (30) includes a cam track (31) arranged to permit an electrical detection of the mechanical movement of the sensor (30).

2. The blocking mechanism for a sliding door (10) of a vehicle according to the preceding claim, the vehicle including an electric motor for displacement of the sliding door (10), **characterized in that** the blocking mechanism for a sliding door (10) of a vehicle includes an electric pick-up arranged to cooperate with the cam track (31) of the sensor (30), and to interrupt a supply circuit of the electric motor for displacement of the sliding door (10).

3. The blocking mechanism for a sliding door (10) of a vehicle according to the preceding claim, **characterized in that** the electric pick-up is sealed.

4. The blocking mechanism for a sliding door (10) of a vehicle according to one of the preceding claims, **characterized in that** it includes a body (33) arranged to receive the sensor (30), and **in that** the body (33) includes an indentation arranged to receive the electric pick-up.

5. A motor vehicle including a blocking mechanism for a sliding door (10) of a vehicle according to one of the preceding claims.

6. The motor vehicle according to the preceding claim, **characterized in that** the sliding door (10) is arranged on the same side of the vehicle as the fuel filler flap (20).
